# EUROPEAN PATENT APPLICATION

(11) **EP 3 211 755 A1**
(43) Date of publication of application: **30.08.2017**
(21) Application number: 17157716.6
(22) Date of filing: 23.02.2017
(51) Int. Cl.: H02J 7/34, H02J 7/00, F02N 11/12, H02J 1/00

(54) **VEHICLE JUMP START UNIT POWERED BY A PORTABLE POWER TOOL BATTERY PACK**

(30) Priority: 23.02.2016 US 201662298523 P
(71) Applicant: Inskeep, Mathew, Highland Beach, FL 33487 (US); Shum, Henry, Boca Raton, Florida 33432 (US)
(72) Inventor: Inskeep, Mathew, Highland Beach, Florida 33487 (US); Shum, Henry, Boca Raton, Florida 33432 (US)
(74) Representative: Nederlandsch Octrooibureau

(57) **Abstract**

A fast charging high energy storage capacitor system jump starter is described. The jump starter apparatus incorporates a method of using extracted energy from a battery pack, such as a battery pack used with a portable power tool. The extracted energy is stored at a higher DC potential level by the capacitor system after being boosted or stepped up by a boost/convertor circuit. The stored energy is then available for use in starting a motor vehicle whose vehicle battery as become depleted such that it does not provide enough energy for its intended purposes. The disclosed system and method provide for the motor vehicle battery, combined with a fast charging high energy capacitor bank, to enable the rapid and effective way to jump start a vehicle.

## Description

### Technical Field

The present disclosure relates to a portable power tool battery pack coupled with a high-energy capacitor bank to be used as a jump starter assist on a depleted energy system.

### Background Art

Power tool battery packs are available and in great demand in the industry of hand held power tools. They are available in various sizes and battery chemistries depending on the manufacturer of the tool. Thus far, battery packs are used in the industry to operate tools such as screwdrivers, impact wrenches, vacuums, blowers etc. Battery packs are used to provide energy to an associated power tool. Presently, power tool battery packs do not have the capability for other uses, such as, but not limited to, safely providing a jump start assist to a depleted automotive battery, because the internal energy and construction it is limited by its design. There exists a need for using the energy inside a battery pack for other purposes, such as, but not limited to, recharging purposes. The present invention is directed to this current need.

### Summary

The disclosure describes a system and method for using the energy stored inside a tool battery pack as a source of energy to rapidly charge a capacitor bank. The disclosed system and method differ from the traditional use of a typical tool battery pack and also differ from the traditional use of electrolytic capacitors or that of the like. The use of the battery pack and capacitor bank as described herein can be used in one non-limiting embodiment, as a jump start assist system in a motor vehicle or for similar applications.

Though not limiting, the disclosed system and method can be preferably targeted for the automotive industry, though other industries may also benefit from use of the disclosed system and method and are also considered within the scope of the disclosure. The disclosed system generally electrically couples a battery pack with a high-energy capacitor bank in order to provide extra energy to assist a depleted motor vehicle battery during an engine starting cycle. The capacitor storage bank preferably can be charged to its optimum energy level by taking some of the energy away from the tool battery pack. In return, the capacitor bank can provide a high jolt of energy to the depleted system in need of a quick boost. In the non-limiting automotive use embodiment, the energy can flow from the portable power tool battery to the capacitor jump start system and then to the motor vehicle's electrical system. The energy can flow via high output power transmission lines and connectors.

Therefore, according to a first aspect, there is provided a system for aiding in starting of a motor vehicle whose vehicle battery has been depleted to an energy level where the vehicle battery is unusable for an intended purpose of starting the vehicle on its own. The system comprises: - a boost or step up converter circuit adapted for electrical communication with a battery pack and capable of extracting the reserve energy from the battery pack and boosting a DC voltage potential for the extracted reserve energy to a higher level than a specific DC voltage potential level of the battery pack; - a current limiter circuit in electrical communication with an output of the boost or step up converter circuit; and - a single cell or capacitor bank in electrical communication with an output of the current limiter circuit, said single cell or capacitor bank adapted for electrical communication to an electrical load device and when the single cell or capacitor bank is charged the single cell or capacitor bank is capable and available for charging the load device. The current limiter circuit restricts a maximum current delivered to the single cell or capacitor bank from the energy extracted from the battery pack and regulates a charging time for the single cell or capacitor bank using the energy extracted from the battery pack.

According to an embodiment, the boost or step up converter includes a high frequency pulse width modulator.

According to an embodiment, the system further comprises a high power switch in electrical communication with an output line of the single cell or capacitor bank, wherein the charged single cell or capacitor bank is permitted to charge the load device when the switch is closed.

According to an embodiment, the load device is a dead battery of a motor vehicle.

According to an embodiment, the boost or step up converter circuit is in electrical communication with the battery pack through a pair of transmission lines.

According to an embodiment, the load device is in electrical communication with the single cell or capacitor bank through a pair of output transmission lines and a pair of clips, a first of the pair of clips being connected to a first of the pair of output transmission lines, and a second of the pair of clips being connected to a second of the pair of output transmission lines.

According to an embodiment, the system further comprises a switch disposed between and in electrical communication with the single cell or capacitor bank, wherein the charged single cell or capacitor bank is permitted to charge the load device or assist in starting a motor vehicle having a depleted battery when the switch is closed.

According to an embodiment, the battery pack is of a type of battery pack used to power a portable power tool.

According to a second aspect, there is provided a method for obtaining electrical energy from a power source for using the obtained energy in aiding in starting of a motor vehicle whose vehicle battery has been depleted to an energy level where the vehicle battery is unusable for an intended purpose of starting the vehicle on its own. The method comprises:
(a) extracting at least a portion of the energy from a battery pack;
(b) boosting or stepping up a specific DC voltage potential level of the extracted reserve energy to a higher DC voltage potential level than the specific DC voltage potential level of the battery pack; and
(c) charging a single cell or capacitor bank using the extracted energy boosted or stepped up to the higher DC voltage potential.

According to an embodiment, the method comprises the step of using electrical energy stored in the charged single cell or capacitor bank to assist in turning over an engine of a motor vehicle whose vehicle battery is depleted to a point where it cannot turn over the engine on its own.

According to an embodiment, the method further comprises the step of using the charged single cell or capacitor bank to charge a previously depleted vehicle battery to a level where the vehicle battery is capable of being used for the intended purpose of the battery.

According to an embodiment, the method further comprises the step of directly or indirectly connecting a boost or step up converter circuit to the battery for performing step (a) and step (b).

According to an embodiment, the method further comprises the step of regulating the timing of using the boosted or stepped up extracted energy when charging the single cell or capacitor bank in step (c).

According to an embodiment, the method further comprises the step of restricting an amount of current that is provided when charging the single cell or capacitor bank in step (c).

According to an embodiment, the method further comprises the steps of regulating the timing of using the boosted or stepped up extracted energy and restricting an amount of current that is provided by a current limiter circuit when charging the single cell or capacitor bank in step (c).

According to an embodiment, the method further comprises the step of closing a switch in electrical communication with an output line of the single cell or capacitor bank prior to charge the load device with the electrical energy stored by the single cell or capacitor bank.

According to another aspect, there is provided a method for aiding in starting of a motor vehicle whose vehicle battery has been depleted to an energy level where the vehicle battery is unusable for an intended purpose of starting the vehicle on its own, said method comprising the steps of:
(a) extracting at least a portion of the energy from a battery pack;
(b) boosting or stepping up a specific DC voltage potential level of the extracted energy to a higher DC voltage potential level than the specific DC voltage potential level by a boost or step up converter circuit directly or indirectly electrically connected to the battery pack;
(c) regulating the timing of supplying the boosted or stepped up extracted energy and restricting an amount of current that is provided to a single cell or capacitor bank by a current limiter circuit that is in electrical communication with the single cell or capacitor bank;
(d) charging a single cell or capacitor bank using the extracted reserve energy supplied by the current limiter circuit;
(e) closing a high power switch in electrical communication with an output line of the single cell or capacitor bank in order to provide electrical communication between the single cell or capacitor bank and a load device; and
(f) using electrical energy stored in the charged single cell or capacitor bank to assist in turning over an engine of a motor vehicle whose vehicle battery is depleted to a point where it cannot turn over the engine on its own or to charge a previously depleted vehicle battery to a level where the vehicle battery is capable of being used for the intended purpose of the battery.

According to an embodiment, the battery pack is of a type of battery pack used to power a portable power tool.

### Brief Description of Drawings

Embodiments will now be described, by way of example only, with reference to the accompanying schematic drawings in which corresponding reference symbols indicate corresponding parts.
Figure 1 is a perspective view of one non-limiting embodiment for the main components of the system in accordance with the present disclosure, with it being understood that the type enclosure used is not considered limited to any particular enclosure and may change depending on the type of tool battery pack;
Figure 2 illustrates an internal electrical connection block diagram for one non-limiting embodiment of the system in accordance with the present disclosure and showing the main components of the system; and
Figure 3 is a block diagram for one non-limiting output stage of the system in accordance with the present disclosure and also illustrating additional components.

The figures are meant for illustrative purposes only, and do not serve as restriction of the scope or the protection as laid down by the claims.

### Description of Embodiments

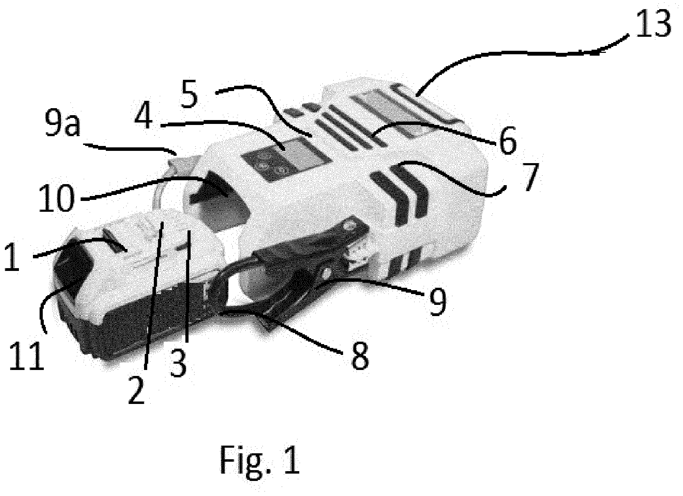

At the outset of use of the disclosed system in connection with a tool battery back, preferably the user verifies that a proper connection has been successfully established between the tool battery pack and the system described herein. Figure 1 is a representation of one non-limiting embodiment for the disclosed system. As seen, a main body enclosure 13 is provided and not considered limited to any particular shape or size. Additionally, as noted above, main body enclosure may change 13, without altering or affecting the electrical characteristic of the described system. Main body enclosure 13 can be constructed so it can accommodate different styles of tool battery pack presently available on the market or later developed. The tool battery pack 1 is provided with one or more, and preferably a plurality of, components that can be mechanically and electrically with the described system of the present disclosure. The tool battery pack 1 preferably can be provided with a mechanical latch 11 for locking and releasing when attaching battery pack 1 to a docking bay 10 of main body enclosure 13, and also for integrating energy transmission lines 2 and 3 for electrical connection Transmission lines 2 and 3 can preferably be the positive and negative voltage potential of battery pack 1.

The voltage and mechanical features for tool battery pack 1 may vary depending on the manufacturer and all variations are considered within the scope of the disclosure. The tool battery pack's primary, if not sole, purpose is to contain and deliver sufficient energy to properly charge internal capacitor bank 6 and thus, tool battery pack 1 is not limited any particular type, model or brand.

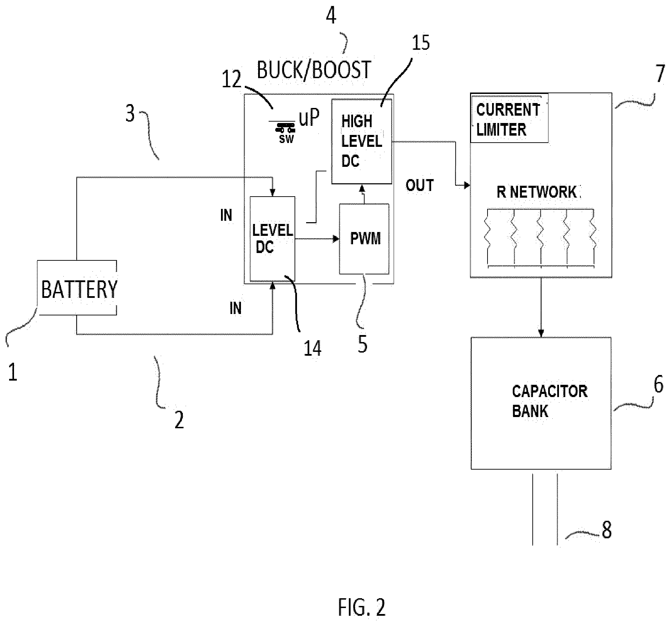

Figure 2 depicts a non-limiting high level breakdown of the internal components of the disclosed system and shown in electrical communication with a battery, such as, but not limited battery pack 1. Both transmission lines 2 and 3 from tool battery pack 1 can be fed into a buck/boost circuit 4. The transfer of energy to buck/boost converter circuit 4 preferably does not occur until the power switch to a microprocessor 12 is active. Microprocessor 12 can be provided with pre-loaded code to control all the timing sequences of the buck/boost converter circuit 4. Generally, circuit 4 can be made up of a power stage and control circuit, referred to by block 14 and 15, respectfully. Energy from tool battery 1 can be transferred to the buck/boost 4 through the transmission line 1 (ref #2) and line 2 (ref #3). The voltage potential can be received by potential level dc/power stage 14, which depending on the input coming in, can send a signal to the pulse width modulator circuit 5, which then determines how much to control of the voltage and current going out of the high level dc/control circuit 15. Because tool battery pack 1 may have a wide input range, there can be a need to regulate the energy to a desirable voltage that does not exceed the safety levels of an electrically connected capacitor bank 6. Accordingly, the boost circuit can implement a combination of integrated circuit and passive components in order to achieve the desired output of the high level dc/control circuit 15. Essentially, buck/boost circuit 4 draws power from tool battery 1 through transmission lines 2 and 3, which entered/inputted as level dc potential signal and outputted/exits as a high level dc potential signal feeding a current limiter circuit 7. Current limiter circuit 7 can be a time delay circuit that can regulate the timing and restrict the maximum current delivered to capacitor bank 6. The current network can essentially regulate current flow and charging time of capacitor bank 6. The current network is shown in FIG. 2 as a non-limiting resistor network. However, other circuit, electronic, electrical, etc. means can also be used and considered within the scope of the disclosure, including those using metal oxide semiconductors. Conventional buck/boost converter circuits and conventional current limiters can be used for buck/boost converter 4 and current limiter 7 shown in FIG. 2 and used for the disclosed system and method.

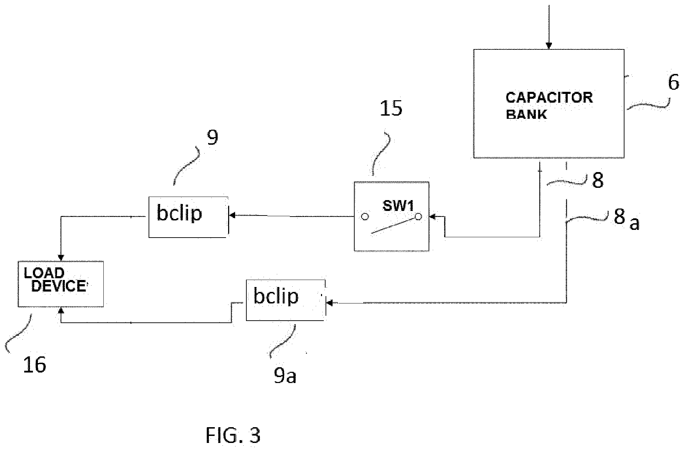

Figure 3 is illustrated a secondary part of the disclosed system, which can be preferably used for transferring energy from capacitor bank 6 onto an external load device 16. After, capacitor bank 6 is charged to its optimum level from battery 1 as described in FIG. 2, the energy stored in capacitor bank 6 can be transferred to the load 16 through output transmission lines 8 and 8a. The first transmission line 8 can be connected to a high output switch 15 device which allows the energy transfer via battery clip 9 to load device 16. The secondary transmission line 8a can be electrically connected to the secondary battery clip 9a and load device 16.

Once the energy has been transferred to load device 16 it is available for use in charging or starting another electrical device, such as, but not limited to, assisting a depleted motor vehicle battery during an engine starting cycle.

Thus, the above disclosure is directed to a system and method for transferring existing energy of a battery pack, such as those used with power tools, and storing it temporarily inside a supercapacitor bank preferably made up individual supercapacitor cells for the non-limiting purpose of transferring it back to a vehicle installed discharged battery electrical system at a higher energy than received from the battery pack in order to turn over a vehicle's electrical system with a discharged battery. The existing energy of the battery pack is being used and temporarily transferred to the supercapacitor bank. Once the supercapacitor bank is fully charged (i.e. which preferably can be minutes), it can be connected in parallel with a vehicle's installed discharged car battery.

The disclosed device in the above-identified application can transfer on demand the energy from the supercapacitor bank into the vehicle's electrical system on demand. This can be achieved because, unlike a car battery that has high internal resistance and its energy is stored chemically, supercapacitors store their energy electrically and have a significant lower internal resistance than that of a vehicle battery, making it possible to deliver their internal energy instantaneously at a faster rate and at a higher energy for a short period of time. Additionally, when the device is coupled in the parallel circuit configuration with the vehicle's installed car battery, the starting current needed to turn over the engine, is split across each path (parallel circuit) with respect to their internal impedance, making it possible that the combined total energy, become sufficient to turn the engine over via electrical system of a vehicle.

The purpose of the step-up converter described above, is to charge the supercapacitor bank preferably to its maximum voltage potential using a lower voltage source, such as, but not limited to, the battery pack of a power tool, whose voltage may not be sufficient for a cranking current to turn over the engine without additional assistance. This is where the supercapacitor provides the boost.

In one non-limiting embodiment, the supercapacitor bank can be a 58 microfarad bank capable of generating up to 250-300 cranking current preferably for about 1-2 seconds, which when coupled in parallel with the in installed car battery assist in starting the car. As previously stated, the combined total energy (supercapacitor with energy in the battery pack), become sufficient to turn the engine over via electrical system of a vehicle. For larger engines or if larger cranking current is required, the capacitor bank can be doubled without altering the basic functionality of the disclosed device.

The boost circuit, when initially connected to the battery pack can start by transferring some of the reserve energy into the capacitor bank at a current rate allowable by the battery pack. In one non-limiting embodiment, the boost circuit can be capable of a charging rate of, but not limited to, six amperes, though other values can be used and are considered within the scope of the disclosure. The boost circuit can also monitor the battery pack against complete depletion, which can be noticeable by the on/off duty cycle curve of the boost circuit. The rate of current varies according to the capacity of the battery pack. The charging rate can be depended of the energy source. The transfer of energy from the battery pack to the capacitor can be considered the first stage.

The battery pack can be electrically coupled with a higher potential unrestricted energy source. Both sources can begin to balance each other with respect to an ideal twelve-volt electrical system. This enables a vehicle's electrical system the capability to utilize both sources as a single energy potential for the purpose of restarting the electrical system (turning over the engine). After a period of time, which in one non-limiting embodiment can be under a minute from connecting both energy sources, the combined output expands the boost capabilities. Connecting the output side of the capacitor bank to the discharged battery can be considered the second stage.

The final stage can be to crank assist start the electrical system of the vehicle with a depleted battery. It's an industry standard that the minimum current and voltage to turn over a standard vehicle engine should have a minimum threshold of 7.2 volt and a minimum current of 200 amps, though such is not considered limiting.

Certain non-limiting features of the above disclosed system and method include:
1. A power tool battery pack with a wide nominal voltage coupled with a capacitor bank;
2. A power tool battery pack coupled with a capacitor bank;
3. A power tool battery pack coupled with a capacitor bank, with an integrated up/down converter to accommodate wide input nominal voltage; and
4. A power tool battery pack coupled with a capacitor bank, integrated up/down converter and a high output power switch to provide jump start assist to a depleted system.

It should be understood that the exemplary embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from their spirit and scope.

All components of the described device/system and their locations, electronic communication methods between the system components, wiring, attachment or securement mechanisms, dimensions, values, shapes, materials, etc. discussed above or shown in the drawings, if any, are merely by way of example and are not considered limiting and other component(s) and their locations, electronic communication methods, wiring, attachment or securement mechanisms, dimensions, values, shapes, materials etc. can be chosen and used and all are considered within the scope of the disclosure.

The benefits, advantages, solutions to problems, and any element(s) that may cause any benefit, advantage, or solution to occur or become more pronounced are not to be construed as a critical, required, or essential features or elements of any or all the claims.

While the system and method have been described and disclosed in certain terms and has disclosed certain embodiments or modifications, persons skilled in the art who have acquainted themselves with the disclosure, will appreciate that it is not necessarily limited by such terms, nor to the specific embodiments and modification disclosed herein. Thus, a wide variety of alternatives, suggested by the teachings herein, can be practiced without departing from the spirit of the disclosure, and rights to such alternatives are particularly reserved and considered within the scope of the disclosure.

### List of Reference Symbols

Non-limiting descriptions for the reference numbers seen in Figures 1-3 can include:
- 1: Tool battery pack body enclosure
- 2: Tool battery transmission line 1
- 3: Tool battery transmission line 2
- 4: Buck/boost circuit
- 5: Pulse width modulator
- 6: Capacitor bank
- 7: RC Network
- 8: Capacitor output transmission line
- 8a: Capacitor output transmission line
- 9: Battery clip or clamp 1
- 9a: Battery clip or clamp 2
- 10: Docking bay
- 11: Tool battery release lock latch
- 12: Microprocessor control
- 13: Main body enclosure representation
- 14: Power stage
- 15: Output switch
- 16: Load

## Claims

1. A system for aiding in starting of a motor vehicle whose vehicle battery has been depleted to an energy level where the vehicle battery is unusable for an intended purpose of starting the vehicle on its own, said system comprising:
- a boost or step up converter circuit (4) adapted for electrical communication with a battery pack (1) and capable of extracting the reserve energy from the battery pack and boosting a DC voltage potential for the extracted reserve energy to a higher level than a specific DC voltage potential level of the battery pack;
- a current limiter circuit (7) in electrical communication with an output of the boost or step up converter circuit; and
- a single cell or capacitor bank (6) in electrical communication with an output of the current limiter circuit, said single cell or capacitor bank adapted for electrical communication to an electrical load device (16) and when the single cell or capacitor bank is charged the single cell or capacitor bank is capable and available for charging the load device;
wherein the current limiter circuit restricts a maximum current delivered to the single cell or capacitor bank from the energy extracted from the battery pack and regulates a charging time for the single cell or capacitor bank using the energy extracted from the battery pack.

2. The system for aiding according to claim 1, wherein the boost or step up converter (4) including a high frequency pulse width modulator (5).

3. The system for aiding according to claim 1 or 2, further comprising a high power switch (15) in electrical communication with an output line (8) of the single cell or capacitor bank (6), wherein the charged single cell or capacitor bank is permitted to charge the load device (16) when the switch is closed.

4. The system for aiding according to any one of claims 1-3, wherein the load device (14) is a dead battery of a motor vehicle.

5. The system for aiding according to any one of claims 1-4, wherein the boost or step up converter circuit (4) in electrical communication with the battery pack through a pair of transmission lines (2, 3).

6. The system for aiding according to any one of claims 1-5, wherein the load device (16) is in electrical communication with the single cell or capacitor bank (6) through a pair of output transmission lines (8, 8a) and a pair of clips (9, 9a), a first of the pair of clips connected to a first of the pair of output transmission lines and a second of the pair of clips connected to a second of the pair of output transmission lines.

7. The system for aiding according to any one of claims 1-6, further comprising a switch (15) disposed between and in electrical communication with the single cell or capacitor bank (6), wherein the charged single cell or capacitor bank is permitted to charge the load device (16) or assist in starting a motor vehicle having a depleted battery when the switch is closed.

8. The system for aiding according to any one of claims 1-7, wherein the battery pack (1) is of a type of battery pack used to power a portable power tool.

9. A method for obtaining electrical energy from a power source for using the obtained energy in aiding in starting of a motor vehicle whose vehicle battery has been depleted to an energy level where the vehicle battery is unusable for an intended purpose of starting the vehicle on its own, said method comprising the steps of:
(a) extracting at least a portion of the energy from a battery pack (1);
(b) boosting or stepping up a specific DC voltage potential level of the extracted reserve energy to a higher DC voltage potential level than the specific DC voltage potential level of the battery pack; and
(c) charging a single cell or capacitor bank (6) using the extracted energy boosted or stepped up to the higher DC voltage potential.

10. The method for obtaining according to claim 9, further comprising the step of using electrical energy stored in the charged single cell or capacitor bank (6) to assist in turning over an engine of a motor vehicle whose vehicle battery is depleted to a point where it cannot turn over the engine on its own.

11. The method for obtaining according to claim 9 or 10, further comprising the step of using the charged single cell or capacitor bank (6) to charge a previously depleted vehicle battery to a level where the vehicle battery is capable of being used for the intended purpose of the battery.

12. The method for obtaining according to any one of claims 9-11, further comprising the step of directly or indirectly connecting a boost or step up converter circuit (4) to the battery (1) for performing step (a) and step (b).

13. The method for obtaining according to any one of claims 9-12, further comprising the step of regulating the timing of using the boosted or stepped up extracted energy when charging the single cell or capacitor bank (6) in step (c).

14. The method for obtaining according to any one of claims 9-13, further comprising the step of restricting an amount of current that is provided when charging the single cell or capacitor bank (6) in step (c).

15. The method for obtaining according to any one of claims 9-14, further comprising the steps of regulating the timing of using the boosted or stepped up extracted energy and restricting an amount of current that is provided by a current limiter circuit (7) when charging the single cell or capacitor bank (6) in step (c).

16. The method for obtaining according to any one of claims 9-15, further comprising the step of closing a switch (15) in electrical communication with an output line (8) of the single cell or capacitor bank (6) prior to charge the load device (16) with the electrical energy stored by the single cell or capacitor bank.
